# EUROPEAN PATENT SPECIFICATION

(11) **EP 3 260 271 B1**
(45) Date of publication and mention of the grant of the patent: **02.09.2020**
(21) Application number: 16752195.4
(22) Date of filing: 22.01.2016
(51) Int. Cl.: B29C 48/88, B29C 55/18, B29C 55/06, B29C 48/08, H01M 2/16

(54) **METHOD FOR PRODUCING MICROPOROUS PLASTIC FILM**
VERFAHREN ZUR HERSTELLUNG VON MIKROPORÖSER KUNSTSTOFFFOLIE
PROCÉDÉ DE PRODUCTION DE FILM PLASTIQUE MICROPOREUX

(30) Priority: 20.02.2015 JP 2015031388
(43) Date of publication of application: 27.12.2017
(73) Proprietor: Toray Industries, Inc., Tokyo, 103-8666 (JP)
(72) Inventor: ICHINOMIYA, Takashi, Otsu-shi Shiga 520-8558 (JP); SUGATA, Masami, Tokyo 1038666 (JP)
(74) Representative: Mewburn Ellis LLP
(86) International application number: PCT/JP2016/051776
(87) International publication number: WO 2016/132806

(56) References cited:
- EP-A1- 2 799 475
- WO-A1-2010/018749
- WO-A1-2010/095518
- JP-A- H0 257 316
- JP-A- S5 022 069
- JP-A- S5 165 178
- JP-A- 2009 249 480
- JP-A- 2009 249 480
- JP-A- 2010 160 483
- US-A1- 2014 077 405

## Description

### Technical Field of the Invention

Our invention relates to a method for producing a microporous plastic film.

### Background Art of the Invention

Microporous plastic films have been broadly used as a substance separation membrane, permselective membrane, separator material of electrochemical element such as alkali rechargeable battery, lithium rechargeable battery, fuel cell and capacitor or the like. A separator for lithium ion battery is a particularly suitable application.

Patent documents 1 and 2 disclose a wet process for producing a microporous film made of plastic like polyolefin. In the wet process, a diluent such as liquid paraffin is added to a polymer, and is kneaded and dispersed, and then discharged through a die lip onto a cooling drum to be cooled and solidified to form a gel sheet, which is oriented uniaxially or biaxially by a roller method or tenter method for improving strength to produce a film having micropores by extracting the diluent.

Particularly by the roller method drawing the sheet in the travelling direction by a plurality of rollers, the lengthwise draw ratio can be changed freely by only changing a roller speed. By the other tenter method, the microporous plastic film can be improved in mechanical property because polyolefin molecules can be oriented with strong orientation in the drawing direction. As disclosed in Patent document 1, the roller method applied to the wet process might make the diluent bleed out from a gel sheet surface under a pressure caused by heat or tension while the conveying and drawing are performed in the presence of the diluent between film and roller surface. To draw such a gel sheet, the sheet is sufficiently cooled below the crystallization ending temperature of the polymer and is heated again below the melting point as disclosed in Patent document 2 where it is heated above the crystallization dispersion temperature.

EP 2799475 A1 concerns a polyolefin microporous membrane produced by forming a gel-like molding using a polyolefin resin containing polypropylene, and stretching the molding in at least one direction, followed by washing, the polyolefin microporous membrane having an injection of electrolyte of 20 seconds or less and a uniform polypropylene distribution in at least one plane perpendicular to the thickness direction. US 2014/0077405 A1 concerns a device including a movement mechanism having a constraining means capable of mechanically constraining both widthwise edge parts of the strip-like and film-like microporous film precursor in the drying chamber; a drying means and a liquid seal tank.

### Prior art documents

### Patent documents

Patent document 1: JP2009-249480-A
Patent document 2: JP2013-530261-A

### Summary of the Invention

### Problems to be solved by the Invention

The wet roller method disclosed in Patent document 1 might have a problem that the diluent intervening between the roller and film lubricates to meander or fail a desirable draw ratio because of slip.

According to Patent document 1, the above-described slip can be prevented when a tension over the lengthwise draw tension is given between the lengthwise drawing machine and the lateral drawing machine (tenter), wherein the tension should preferably be greater than the draw tension by 20%. However, we found that such a great tension over the draw tension drew the sheet downstream of the lateral drawing machine to cause an undesirable slip adversely.

According to Patent document 2, a predetermined range of contact time, contact angle and contact length between the lengthwise drawing roller and the sheet can prevent the slip and the sheet surface from being damaged. However, we found even such measures couldn't fully prevent the slip when we had an increased draw speed, a decreased draw temperature or an increased draw ratio in order to improve physical properties and mechanical properties of the microporous plastic film.

Accordingly, it could be helpful to provide a method for producing a microporous plastic film excellent in physical properties and mechanical properties by a high-speed drawing without slip under a high productivity.

### Means for solving the Problems

To achieve the above-described object, our method for producing a microporous plastic film comprises: kneading a diluent and a polyolefin resin with an extruder; discharging the polyolefin resin kneaded with the diluent from a die lip in a sheet shape; cooling and solidifying the sheet discharged from the die lip on one or plurality of cooling drums; reheating and drawing the solidified sheet with a plurality of rollers in a sheet conveying direction; cooling the sheet drawn in the sheet conveying direction; gripping both ends of the sheet with clips; introducing the sheet into a tenter; and washing the diluent out to prepare a uniaxially or biaxially oriented microporous plastic film, wherein the method further comprises: driving each of at least two of the rollers by a motor; bringing each surface of two rollers (A) and (B) among said at least two of the rollers each driven by the motor into contact with a surface of the sheet opposite to another surface contacting a first cooling drum defined as a cooling drum which first contacts the sheet discharged from the die lip among the cooling drums; and controlling each rotation speed of the rollers (A) and (B) to draw the sheet substantively between the rollers (A) and (B).

In our method for producing a microporous plastic film, it is preferable that the sheet is nipped with a nip roller substantively along a tangent line to start contacting at least one of the drawing rollers (A) and (B).

In our method for producing a microporous plastic film, it is also preferable that the roller (A) and the roller (B) are adjacent to each other.

In our method for producing a microporous plastic film, it is also preferable that a plurality of pairs of roller (A) and roller (B) are provided in a lengthwise drawing process.

In our method for producing a microporous plastic film, it is also preferable that a cooling roller is provided as a roller most downstream among one or more pairs of roller (A) and roller (B).

In this specification, "nip" means to press a sheet as being interposed with rollers. "Nip roller" means one of the two rollers used to press the sheet interposing therebetween, the one being pressed onto the other one facing to the one by moving to press the sheet interposing therebetween.

### Effect according to the Invention

Our invention can produce, with high productivity, a microporous plastic film having excellent physical properties and mechanical properties by preventing slip even in wet roller drawing.

### Brief explanation of the drawings

[Fig. 1] Fig. 1 is a schematic side view showing a production process of our microporous plastic film.
[Fig. 2] Fig. 2 is a schematic side view showing an example of cooling process of a gelled sheet in producing our microporous plastic film.
[Fig. 3] Fig. 3 is a schematic side view showing an example of lengthwise drawing process in producing our microporous plastic film.
[Fig. 4] Fig. 4 is a schematic side view showing another example of lengthwise drawing process in producing our microporous plastic film.
[Fig. 5] Fig. 5 is a schematic side view showing yet another example of lengthwise drawing process in producing our microporous plastic film.
[Fig. 6] Fig. 6 is a schematic side view showing yet another example of lengthwise drawing process in producing our microporous plastic film.
[Fig. 7] Fig. 7 is a schematic side view showing an example of lengthwise drawing process in producing a conventional microporous plastic film.
[Fig. 8] Fig. 8 is a schematic side view showing an example of lengthwise drawing process in producing another conventional microporous plastic film.

### Embodiments for carrying out the Invention

Hereinafter, desirable examples of our microporous plastic film will be explained with reference to figures.

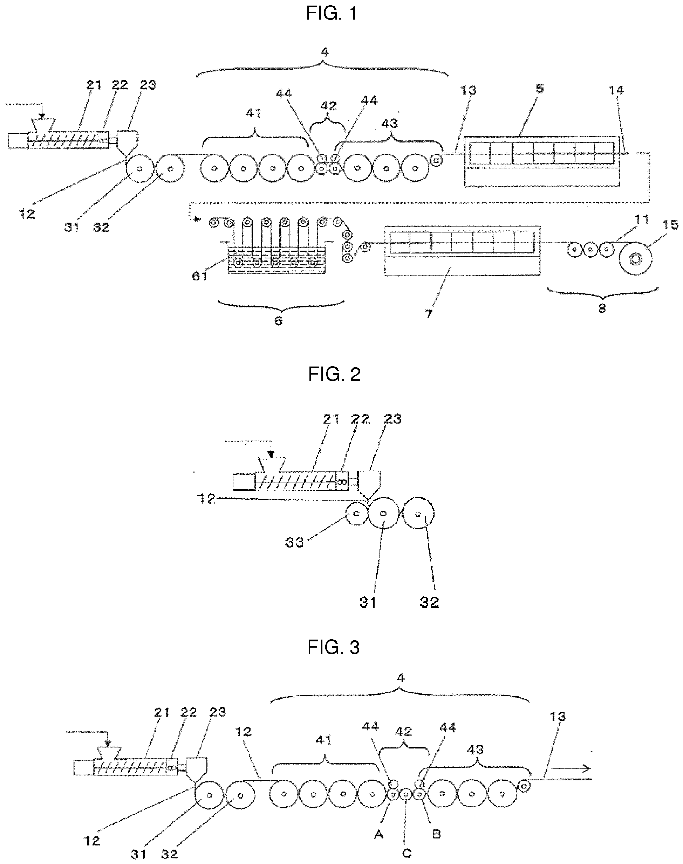

Fig. 1 is a schematic side view showing a production process of our microporous plastic film.

To desirably produce microporous plastic film 11, polyolefin resin is mixed with diluent and heated to melt to prepare polyolefin solution. The diluent decides a structure forming micropores of the microporous plastic film and contributes to improvement of drawability (for example, improvement as reduction of unevenness at a draw ratio for exhibiting a strength) at the time of drawing film.

The diluent is not limited particularly, as far as it can be mixed or dissolved with polyolefin resin. The diluent may be mixed with polyolefin in a melt-kneading state. Alternatively, it may be mixed with solid solvent at room temperature. Such prepared solid diluent may be stearyl alcohol, ceryl alcohol, paraffin wax or the like. It is preferable that the diluent is a liquid at room temperature from viewpoints of prevention of uneven drawing and coating convenience at a later stage. The liquid diluent may be a fatty series such as nonane, decane, decalin, paraxylene, undecane, dodecane and liquid paraffin; a cyclic fatty series or an aromatic hydrocarbon; a mineral oil fraction having a boiling point of the same range as the compounds thereof; or a phthalate ester, such as dibutyl phthalate and dioctylphthalate which are liquids at room temperature. To obtain a gelled sheet stably containing liquid diluent, it is preferable to employ a nonvolatile diluent such as liquid paraffin. For example, it is preferable that the liquid diluent has a viscosity of 20 to 200 cSt at 40°C.

It is preferable that the polyolefin resin of 10 to 50 mass% is mixed with the diluent in total 100 mass% of polyolefin resin and diluent, from a view point of good formability of extruded product. The polyolefin resin solution may be melt-kneaded uniformly by a calendar, mixer or extruder 21 having a screw as shown in Fig. 1.

It is preferable that the polyolefin solution in extruder 21 has a predetermined temperature of which range is 140 to 250 °C for polyethylene composition and is 190 to 270 °C for polypropylene-containing composition, as depending on resin kind. A thermometer is provided inside extruder 21 or in a cylinder section to monitor a temperature indirectly and properly adjust the heater temperature, rotation speed and discharge rate of the cylinder section to control the temperature in a target range.

The polyolefin solution which has been melt-kneaded by extruder 21 is discharged through a slit section of die lip 23 into a sheet while it is measured with gear pump 22 as needed. Such discharged gelled sheet 12 is solidified as contacting first cooling drum 31. Where, gelled sheet 12 becomes a pillar part with crystal structure made of the polyolefin supporting pores of microporous plastic film 11. Gelled sheet 12 becomes in a gel state since it includes the diluent melt-kneaded in extruder 21. A part of the diluent bleeds out from sheet surface by cooling gelled sheet 12 so that the sheet with wet surface made by the diluent is conveyed on first cooling drum 31.

The thickness of gelled sheet 12 can be adjusted by adjusting the cooling drum speed relative to the flow rate from the die lip slit section according to discharge rate.

It is preferable that first cooling drum 31 has a temperature of 15 to 40 °C, which may affect on the crystal structure of gelled sheet 12. It is because the final cooling temperature should be below the crystallization ending temperature. The molecular orientation tends to advance in a later drawing process when the higher-order structure is fine. To make up for cooling time, it is possible, that the diameter of first cooling drum 31 is enlarged, that another cooling drum 32 is added to first cooling drum 31 or that a plurality of cooling drums are further added. To make the crystal structure precise and uniform in gelled sheet 12, it is preferable that a parameter, such as convey speed, drum temperature, drum size and the number of drums, is designed in view of the cooling speed. For example, even when a target sheet temperature is 30°C, first cooling drum 31 may be around 20°C because too high speed might cause insufficient heat conduction. Besides, it is preferable that humidity is lowered by air conditioning when the temperature is below 25°C. First cooling drum 31 may have a shape of roller or belt. It is preferable that a surface of first cooling drum 31 is made of metal, ceramic or fiber composite material, which is excellent in shape stability and working accuracy to keep the roller speed constant. It is particularly preferable that the surface is made of a metal which is excellent in heat conduction to a film. It is possible to perform non-adhesion coating or rubber coating on it to the extent that conduction is not obstructed. It is preferable that the surface of sheet and roller are made of metal including metal plating which is excellent in scratch resistance and heat conductivity and is not swelled by the bled-out diluent making wet state on the surface.

It is preferable that the roller has a surface roughness of 0.2 to 40 µm at the maximum height. To make a mirror surface, the surface roughness is preferably 0.2 to 0.8 µm. To make a sufficiently rough surface, the surface roughness is preferably 20 to 40 µm. Because the surface of the roller is wet with the diluent, the mirror surface has a low coefficient of friction caused by lubrication. The rough surface has an increased coefficient of friction caused by less or no lubrication because the diluent discharges from the unevenness. Although the mirror surface and the rough surface may be combined as needed, it is basically preferable that the mirror surface is provided from viewpoints of maintenance such as cleaning and speed control precision, preferably with a certain lubricant with diluent to prevent the sheet from having uneven appearance.

It is preferable that first cooling drum 31 and second cooling drum 32 are provided with a conventional heat pump or cooling device in addition to an internal flow path for refrigerant to control the surface temperature. The roller is driven to rotate by a rotation driving means such as motor at a predetermined speed while a speed-changing mechanism may be provided between rollers to apply draw tension or relaxation according to expansion and shrinkage of the sheet. Alternatively, each roller may be provided with a motor to achieve function like the speed-changing mechanism by accurately adjusting the speed by inverter or servo.

In Fig. 1, the top side of gelled sheet 12 is discharged from die lip 23 and contacts first cooling drum 31 which first contacts it, and then is rapidly cooled with refrigerant at the above-described temperature. On the other hand, the side opposite to the side contacting the above-described first cooling drum 31 is slowly cooled with air as shown in Fig. 1. Although it is not illustrated in the figures, it is preferable that the side opposite to the side contacting first cooling drum 31 is cooled by forced circulation with air nozzle or air chamber to make a rapid cooling of the opposite side. Such a configuration would be suitable to such a case that the conveying speed is high or the gelled sheet is too thick to conduct heat sufficiently to first cooling drum 31. Also, the opposite side can be improved in cooling ability by providing refrigerant-flowing nip roller 33 in which refrigerant flows inside opposite to first cooling drum 31 as shown in Fig. 2.

To prevent wet gelled sheet 12 from meandering or degrading the cooling efficiency by lubrication, it is possible that the sheet is pushed onto drum 31 with a contacting means such as nip roller, jet nozzle, suction chamber and electrostatic application. Such a contacting means can improve the travelling property and cooling efficiency of gelled sheet 12 to enable easy setting of the cooling speed and the final cooling temperature.

Other than first cooling drum 31, it is preferable that gelled sheet 12 is depressed with a nip roller onto second cooling drum 32 or other conveying roller to increase coefficient of friction which has been decreased on the mirror surface. It is preferable that the surface of nip roller is made of rubber-like elastic material which can depress gelled sheet 12 uniformly onto uneven thickness of gelled sheet 12, deflection of roller and slight surface unevenness, while the material is preferably a general vulcanized rubber such as Nitrile isoButylene-isoprene Rubber (NBR), Chloroprene Rubber (CR), Ethylene Propylene Rubber (EPDM) and Hypalon rubber (CSM). When gelled sheet 12 or conveying roller has a high temperature like 80°C or higher, it is particularly preferable to employ the EPDM or CSM. Under a higher temperature, it is preferable to employ a silicone rubber or a fluorine rubber as well as the vulcanized rubber. It is preferable to employ a rubber which is little swelled by diluent to prevent the roller from having a distorted shape over time.

Next, gelled sheet 12 is oriented in a sheet-conveying direction with a plurality of roller groups in lengthwise drawing process 4, and then both ends of uniaxially oriented sheet 13 are gripped by a conventional clip to be oriented in a sheet width direction (direction orthogonal to the conveying direction) while the sheet is conveyed in the travelling direction while heated and kept warm in an oven. Such a drawing process can achieve a high productivity and characteristics such as strength and air permeability of microporous film. The drawing process in the sheet-conveying direction (which may be called "lengthwise drawing") as well as driving process is performed with a roller having a metal surface and a temperature control mechanism such as conventional heater inside. To ensure the freedom of roller path, it is possible to provide an idler roller which is not driven and not shown in Fig. 1. Such an idler roller should have small bearing and inertia loss so that a small rotation power is sufficient because the coefficient of friction is small between wet film and roller, and should not be provided more than needed.

Alternatively, like first cooling drum 31, it is preferable that heating roller group 41 or drawing roller group 42 has an internal structure in which the roller is provided with a flow path for heat medium such as vapor and pressured hot water. It is possible that the roller is supported as rotatable with bearings and a shaft end is connected to a heat-medium supply pipe with a rotary joint for supplying heat medium without obstructing the rotation of roller to supply heat medium to the inside.

It is preferable that the drawing is performed at a draw ratio of 5 to 12 in a sheet conveying direction although depending on the gelled sheet thickness. To improve strength and productivity, it is preferable that the drawing is performed at an area ratio of 30 or more in a sheet width direction as needed together with the sheet conveying-directional drawing. It is preferable that the area ratio is 40 or more, preferably 60 or more.

It is preferable that a drawing temperature is a melting point of polyolefin resin or less. It is preferable that the temperature is in a range of [crystal dispersion temperature Tcd of polyolefin resin] to [melting point of polyolefin resin]. For example, it is preferable that the temperature is 80 to 130 °C for polyethylene resin, preferably 100 to 125 °C. After the drawing, a cooling process is performed down to these temperatures.

Thus performed drawing cleaves a higher order structure formed on the gelled sheet to miniaturize crystal phase and form many fibrils. The fibrils are three-dimensionally connected irregularly to form a web structure. It is suitable for a battery separator because the drawing improves mechanical strength and enlarges fine pores.

Thus obtained uniaxially oriented sheet 13 or biaxially oriented sheet 14 can be washed to remove diluent and dried up to make microporous plastic film 11 by a conventional technology as disclosed in WO2008/016174. To make microporous plastic film 11, it is possible that dry drawing process 7 is performed to reheat and redraw the sheet after washing process 6. Re-drawing process 7 may be performed with a roller or a tenter. Also, heat treatment may be performed to adjust physical properties and remove residual distortion through the process. Depending on intended purposes, it is possible that the surface of microporous plastic film 11 is subject to a surface treatment such as corona discharge or functional coating with heat-resistant particles.

In Fig. 1, included diluent bleeds out from gelled sheet 12 by being cooled on first cooling drum 31 and second cooling drum 32. The diluent bleeds out even by stress derived from conveying tension. For the same reason, gelled sheet 12, oriented films 13 and 14 have a surface wet with diluent after being discharged from die lip 23 before the diluent is removed in washing process 6. In particular, gelled sheet 12 is heated up to the above-described drawing temperature with heating roller group 41 or the like in lengthwise drawing process 4, so that the heating accelerates the bleeding out of the diluent. Such amount of bleeding out is great at a part from cooling drum 31 to heating roller group 41 upstream of lengthwise drawing process 4. Because the diluent bleeding out drops along the roller surface in Fig. 1, it is preferable that a pan (not shown) to collect it to be discarded or reused is provided.

Gripping force (frictional force) is necessary between the roller and gelled sheet 12 to convey gelled sheet 12 without meandering in a travelling direction. Particularly in the drawing part where a high tension is generated by drawing, a high gripping force balancing the drawing tension is required to achieve a necessary draw ratio. The diluent having bled out as described above interposes between the roller and gelled sheet 12 in lubrication state to cause a deterioration of the gripping force required for conveyance and drawing.

We found that there is a correlation between the cooling speed by first cooling drum 31 and surface state of gelled sheet 12 causing the deterioration of gripping force. As described above, the temperature of first cooling drum 31 greatly influences crystal structure of gelled sheet 12. When gelled sheet 12 in fusion state is solidified by cooling on first cooling drum 31, the faster the cooling speed is the more precise the crystal structure is, while the slower it is the more coarse the crystal structure is. We found that the lubricating diluent tends to make it slippery when the cooling speed is faster and the crystal structure is more precise. We also found that the amount of diluent bleeding out of a surface contacting first cooling drum 31 is greater at a part from cooling drum 31 to the heating section of lengthwise drawing process 4.

Gelled sheet 12 is quenched on first cooling drum 31. It is preferable that a surface of gelled sheet 12 opposite to the surface contacting first cooling drum 31 is cooled by air nozzles or refrigerant-flowing nip roller 33 as described above, so that inner layer part of gelled sheet 12 can be crystalized as uniformly as possible in the thickness direction. First cooling drum 31 contacts gelled sheet 12 to directly transfer heat at a cooling efficiency higher than air nozzles and air chambers. The refrigerant-flowing nip roller as shown in Fig. 2 has the same heat-transfer ability as first cooling drum 31 but has a cooling efficiency less than first cooling drum 31 because of shorter contact length. It is preferable that the contact length is increased by providing a plurality of refrigerant-flowing nip roller or a metal belt between nip rollers. The cooling speed naturally increases at the side of first cooling drum 31 where refrigerant flows densely in the circumferential direction. Thus in a process producing a microporous plastic film, a the surface contacting first cooling drum 31 has a cooling speed greater than the surface opposite to the surface contacting first cooling drum 31 and has a precise crystal structure of gelled sheet 12 while the amount of diluent bleeding out is great. Therefore, gelled sheet 12 has a slippery surface contacting first cooling drum 31 because of smaller gripping force and smaller frictional force to the roller.

Although heating roller group 41 and drawing roller group 42 are common to each other in terms of heating and heat-keeping function of gelled sheet 12 and variable roller rotation speed, drawing roller group 42 comprises a roller to substantively draw gelled sheet 12 and generates a peripheral speed difference to permanently deform gelled sheet in the travelling direction. More particularly, drawing roller group 42 is defined as rollers which substantively draw it as generating 3% or more of peripheral speed difference relative to the upstream roller.

Accordingly in our invention, rotation speeds of roller (A) and roller (B) are controlled to perform a drawing while surfaces of roller (A) and roller (B) contact the surface opposite to the surface contacting first cooling drum of gelled sheet 12 in lengthwise drawing process 4, wherein roller (A)/(B) may be a roller at upstream/downstream side of drawing roller group 42 in Fig. 1, respectively. With such a configuration, gripping force required for conveyance and drawing can be obtained because gelled sheet 12 has a surface contacting drawing rollers (A) and (B) opposite to the surface contacting first cooling drum 31. Although upstream drawing tension is partially loaded on heating roller group 41, the gripping force of roller (A) becomes greater to stabilize the drawing as keeping necessary draw ratio and preventing conveyance problems such as meandering. Even when the drawing tension is balanced downstream, the clip for gripping the end section of uniaxially oriented sheet 13 greatly receives the load. However, the gripping force of roller (B) becomes greater to perform a nonslip drawing even downstream as preventing the problems such as meandering.

When roller (C) which contacts the surface contacting first cooling drum 31 is provided between roller (A) and roller (B)among rollers contacting the surface opposite to the surface contacting first cooling drum 31 of gelled sheet 122 in Fig. 3, the drawing can be performed substantively with roller (A) and roller (B) while the rotation speed of roller (C) should be controlled so that roller (C) doesn't contribute the drawing. Specifically, the rotation speed of roller (B) is set to 5 times of that of roller (A) when the drawing is performed at 5 times of draw ratio to roller (A). Gelled sheet 12 between roller (A) and roller (B) increases the speed as drawing in the travelling direction. Therefore, the speed of roller (C) may be set to a value in the middle of the speeds of roller (A) and roller (B) so that roller (C) doesn't contribute to the drawing. Since the drawing speed of gelled sheet 12 does not always increase linearly, it is preferable that the speed of roller (C) is adjusted not to vary from a previous torque before drawing by monitoring a torque of motor directly connected to roller (C). With such a configuration, roller (C) doesn't give any torque or drawing force to the sheet being oriented, so that the drawing can be performed substantively with roller (A) and roller (B) without contribution of roller (C). The said previous torque before drawing means a torque in a case that the roller is rotated with no sheet or that a sheet is conveyed without drawing. That is mainly derived from rotation resistance of bearing of motor or roller, or rotation resistance of rotary joint. It is preferable that roller (C) is thus provided between roller (A) and roller (B), so that the neck-in can be reduced by frictional resistance of roller (C) in the width direction relative to the configuration shown in Fig. 1. Besides, even when the speed of roller (C) is adjusted so that roller (C) doesn't contribute to the drawing, roller (C) may be forced to contribute to the drawing slightly because perfect adjustment is difficult. Even such a state can be regarded that "the drawing is performed substantively with roller (A) and roller (B)" because each roller rotates in a speed condition designated to perform the drawing substantively with roller (A) and roller (B) without contribution of roller (C).

It is preferable that gelled sheet 12 is pressed with a nip roller between heating roller group 41 or drawing roller group 42 as well in the cooling process, so that the frictional force which has deteriorated by lubrication of diluent can greatly be increased. Slipping can be prevented even when the drawing generates tension because the surface opposite to the surface contacting first cooling drum 31 of which gripping force is higher contacts the drawing roller in our invention. Further, the gripping force can be increased by using a nip roller as shown in Fig. 1 and Fig. 3 to increase the frictional force to the drawing roller. Although not shown in Figs, it is possible that a nip roller is provided appropriately at heating roller group 41 to partially receive gripping force of drawing tension at the upstream side, so that gelled sheet 12 which is in a melting state between die lip 23 and first cooling drum 31 is prevented from having uneven thickness derived from the drawing tension.

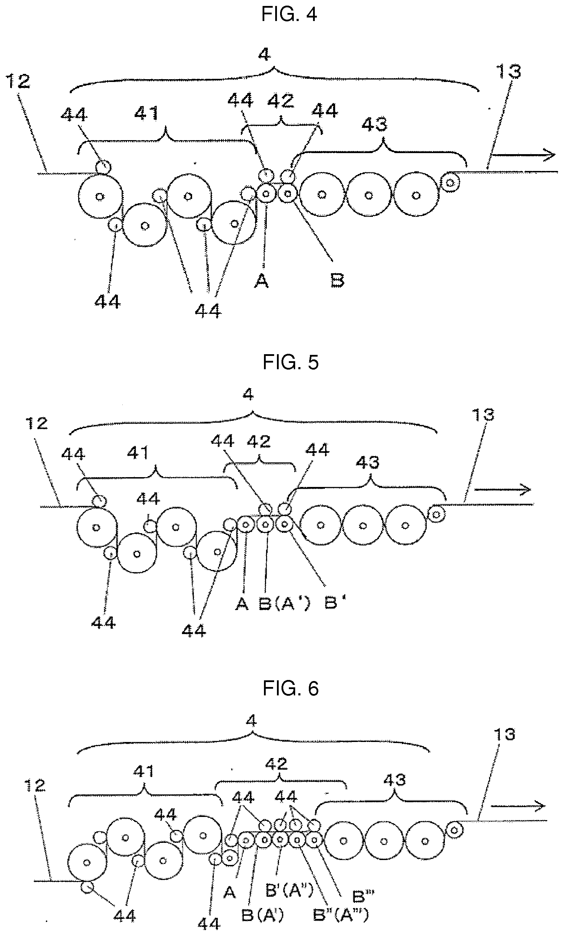

It is possible that a nip is performed along a tangent line substantively with a nip roller to introduce gelled sheet 12 into heating roller group 41 or drawing roller group 42 as shown in Fig. 4, Fig. 5 or Fig. 6, so that slip and meandering can be prevented as improving uniformity of thickness and appearance quality. That is because, when a nip roller is not provided along the tangent line as shown in Fig. 1 and Fig. 3, certain thickness of diluent and air is accompanied between drawing roller group 42 or heating roller group 41 and sheet 12 to make a bank by nipping with nip roller 44 afterwards. The nip roller which is provided substantively along the tangent line can suppress the thickness of diluent and air with nip roller 44 before contacting between drawing roller group 42 or heating roller group 41 and the sheet, so that an oriented sheet having a higher quality can be obtained without forming a bank between gelled sheet 12 and the roller. Not to make gelled sheet 12 oriented greatly while contacting the drawing roller, it is preferable that two nip rollers are provided to drawing roller (A) to perform the nip along the tangent line even at the downstream side.

The phrase "nip along the tangent line" means a nip performed by the nip roller at a position where gelled sheet 12 starts contacting heating roller group 41 or drawing roller group 42. The nip performed with the nip roller at this position makes gelled sheet 12 as if being a tangent line of nip roller. The phrase "a nip is performed along a tangent line substantively" means that a nip which doesn't make a bank is regarded as "a nip performed along a tangent line" even when the nipped part is slightly away from the exact position where the sheet starts contacting the roller.

It is preferable that the surface of nip roller is made of soft rubber-like elastic material which can depress gelled sheet 12 uniformly onto uneven thickness of gelled sheet 12, deflection of roller and slight surface unevenness. Because the lengthwise drawing process accompanies conveyance above the heat dispersion temperature in particular, the material is preferably a heat-resistant rubber such as EPDM and Hypalon rubber. It is preferably silicone rubber or fluoro-rubber. It is preferable to employ a rubber which is little swelled by diluent to prevent the roller from having a distorted shape over time.

It is preferable that roller (C) which doesn't contribute to drawing is provided between roller (A) and roller (B) as shown in Fig. 3, so that the neck-in can be reduced by a gripping force with the roller in the width direction while shortening the travelling distance of gelled sheet 12 in the air. When roller (A) is adjacent to roller (B) as shown in Fig. 1 or Fig. 4, the speed of roller (C) which doesn't contribute to drawing becomes not required to be controlled to simplify the device and reduce cost.

It is preferable that the speed is controlled by a plurality of pairs of roller (A) and roller (B) in the lengthwise drawing process. For example, the drawing is performed as providing speed difference between roller (A) at the most upstream side and roller (B) at the next among drawing roller group 42 as shown in Fig. 5. Next for the second stage of drawing, the speed is controlled by roller (A') and roller (B') while roller (A') is the above-mentioned roller (B) and roller (B') is a roller at the next, as shown in Fig. 3. For example, the draw ratio is decreased at the first stage and the draw ratio is decreased at the second stage, so that physical properties required to drawing films are exhibited at the ratio of the second stage to receive the drawing tension by increasing the gripping force to the roller with the drawing tension at the first stage to improve the stability against slip caused by lubrication of diluent. The roller pairs may be made by combining the layouts of drawing roller group 42 shown in Figs. 1, 3 and 4. It may be as shown in Figs. 5 or 6.

After the lengthwise drawing, it is possible that the sheet is once cooled with cooling roller group 43 and conveyed to a tenter oven to make the process paper feed of uniaxially oriented sheet 13 easy while the crystal structure formed by the lengthwise drawing is solidified in a case of lateral drawing, so that a highly oriented and highly strengthened microporous plastic film can be prepared.

It is particularly preferable that the cooling is performed right after the drawing. The highly-strengthening effect can be maximized by providing the most downstream roller as a cooling roller among pairs of roller (A) and roller (B) in the lengthwise drawing process.

### [Examples]

Hereinafter, our invention will be explained with reference to Examples although it is not limited to these Examples in particular.

### [Example 1]

A mixture is prepared by dry-blending of 0.375 parts by weight of tetrakis[methylene-3-(3,5-ditertiary butyl-4-hydroxyphenyl)-propionate]methane together with 100 parts by weight of polyethylene (PE) composition which comprises 40 mass% of ultrahigh molecular weight polyethylene having mass average molecular weight (Mw) of 2.5x10⁶ and 60 mass% of high-density polyethylene having Mw of 2.8x10⁵.

Thus obtained mixture is fed to twin-screw extruder 21 at flow rate of 97kg/hr by a film forming method shown in Fig. 1. Liquid paraffin as a diluent is fed at flow rate of 291kg/hr to be blended at 210°C.

Thus obtained polyethylene solution is supplied into die lip 23 as being measured by a gear pump and the polyethylene solution at 210°C is discharged on first cooling drum 31 adjusted to 35°C by waterflow to form gelled sheet 12. First cooling drum 31 is driven to rotate at 10m/min.

Gelled sheet 12 is subject to sampling with 10mm square before introduction to lengthwise drawing process 4 to find that the thickness is 1.5mm in 10 times average of contact-type thickness meter. Since bled-out diluent adheres to the surface, the above-described thickness measurement includes ±0.1mm variation at the maximum.

Gelled sheet 12 is heated to 110°C on the sheet surface with heating roller group 41 and a metal waterflow roller at the first roller of drawing roller group 42. Between heating roller group 41 and the first roller of each drawing roller group 42, the rotation speed of motor directly connected to the roller is controlled to make the downstream side faster by 1% of speed difference according to thermal expansion of the sheet. Drawing roller group 42 consists of 2 rollers shown in Fig. 1. Nip roller 44 of which surface is coated with rubber is provided onto each roller to perform lengthwise drawing by speed difference between rollers. Oriented film 13 is cooled on four rollers of cooling roller group 43 including the last roller of drawing roller group 42 to adjust the waterflow roller temperature to make the sheet temperature 50°C. Each clip speed difference between the last drawing roller, cooling roller group 43 and lateral drawing process 5 is 0 to make the speed same. As shown in Fig. 1, the nip roller provided on roller (A) is not substantively on the tangent line but nip roller 44 is nipped on gelled sheet 12 at the position of which winding angle is 45° from starting contact between gelled sheet 12 and roller (A). Nip roller 44 provided on roller (B) is nipped on gelled sheet 12 along the tangent line.

From first cooling drum 31, surfaces of all rollers in lengthwise drawing process 4 are made of steel coated with hard chromic plating of which surface roughness is 0.4µm at the maximum height.

Among drawing roller group 42, drawing is performed at 8.66 of draw ratio between upstream roller (A) contacting the surface of gelled sheet 12 opposite to the surface contacting first cooling drum 31 and downstream roller (B) contacting the surface opposite to the surface contacting drum 31. In other words, the speed is controlled to set to 9 the total draw ratio of uniaxially oriented sheet 13 passing lengthwise drawing process 4, wherein the speed of cooling drum 31 is set to 10m/min, speed ratio from heating roller group 41 to roller (A) is set to 1%, the speed of roller (A) is set to 10.4m/min, and the speed of roller (B) is set to 10.4 x 8.66 = 90m/min.

Both ends of oriented film 13 are gripped with a clip to perform lateral drawing at draw ratio of 6 times at 115°C in an oven, and then biaxially oriented film 14 cooled down to 30°C is washed in a washing bath of methylene chloride kept at 25°C to remove liquid paraffin. The washed film is dried up in a dry kiln kept at 60°C and then is drawn again in redrawing process 7 at areal ratio of 1.2 times in lengthwise and lateral directions. The heat treatment is performed for 20 seconds by 90m/min at 125°C to prepare microporous plastic film 11 having thickness of 16µm and width of 2,000mm.

The amount of diluent bleeding out from the top and bottom surfaces of gelled sheet 12 is measured after casting the film formed with the above-described composition and extrusion. The bleeding-out amount per unit time is measured by the following process, in which a sharp-tipped scraper is contacted to each top and bottom surfaces of gelled sheet 12 by pressing at 20N/m at a part between second cooling drum 32 and lengthwise drawing process 4 in Fig. 1 and the diluent on the surface is scraped off so that the weight of diluent dropped from the side surface of gelled sheet 12 is measured for lmin. The scraper made of fluoro-resin having thickness of 5mm is polished to sharpen the tip to contact gelled sheet 12 to achieve tanθ=5/10. The chamfering of 0.1mm is performed at the front tip to prevent the chipping and scratch onto the sheet. The amount of bled-out diluent is measured by pressing gelled sheet 12 at the above-described pressure and 30° of angle from the parallel direction. Table 1 shows the results, in which the amount of bleeding out on the surface contacting first cooling drum 31 triples relative to the opposite surface. The diluent bleeds out of gelled sheet 12 at heating roller group 41 in lengthwise drawing process 4 even after scratch, in which the bleeding out on the surface contacting first cooling drum 31 is greater as well.

Table 1 also shows a measurement result of coefficient of friction between the surface of gelled sheet 12 and roller. In the process shown in Fig. 1, gelled sheet 12 is sampled by cutting gelled sheet 12 formed by casting at the downstream side of second cooling drum 32.

The coefficient of friction is measured by a conventional method disclosed by formula 2 and Fig. 5 of WO2012/133097 pamphlet. The measurement is performed by hanging 2kg weight on a sheet which has been cut into 100mm width and wound by contact angle of 90° on the lengthwise drawing roller (of which surface is coated with hard chrome plating at 0.4µm at the maximum height) not in operation at normal temperature of 25°C. The roller under suspension is monitored to be prevented from rotating by the suspended motor resistance in the measurement. The coefficients of friction are compared between two samples, where the first sample is wiped with a waste cloth "KIM WIPE" made by Kimberly-Clark Corporation to make the diluent liquid invisible and the second sample is not wiped.

Table 1 shows the result in which the surface of gelled sheet 12 contacting the first cooling drum always has the lower coefficient of friction although there is some difference between before and after wiping with the waste cloth.

**[Table 1]**

| | Surface of sheet 12 contacting first drum 31 | | Surface opposite to contacting surface of sheet 12 with first drum 31 | |
|---|---|---|---|---|
| Bleed-out amount of diluent[g/m²] | 0.025 | | 0.08 | |
| Coefficient of friction µs | Before wiping with KIM WIPE | After wiping with KIM WIPE | Before wiping with KIM WIPE | After wiping with KIM WIPE |
| | 0.06 | 0.17 | 0.17 | 0.37 |

### [Example 2]

A microporous plastic film is produced by the same devices and the same condition as Example 1, except that drawing roller group 42 consists of three rollers as shown in Fig. 3 and the drawing is performed substantively with roller (A) and roller (B) as adjusting the speed to keep the motor rotation torque of drawing roller (C) within a torque range under no-load operation.

### [Example 3]

A microporous plastic film is produced by the same devices and the same condition as Example 1, except that nip roller 44 is provided on each heating roller group 41 and drawing roller group 42 along a tangent line substantively as shown in Fig. 4 and the drawing is performed between drawing roller (A) and roller (B).

### [Example 4]

As shown in Fig. 5, drawing roller group 42 consists of three rollers, the first-stage drawing is performed between roller (A) and roller (B) and the second-stage drawing is performed with the second roller (B) as roller (A') and the third roller as roller (B'). The first-stage draw ratio is 2 times and the second-stage draw ratio is 4.33 times so that the total draw ratio from the first to the third roller is 2 x 4.33 = 8.66 times the same as Example 1. The other conditions are the same as Example 1.

### [Comparative Example 1]

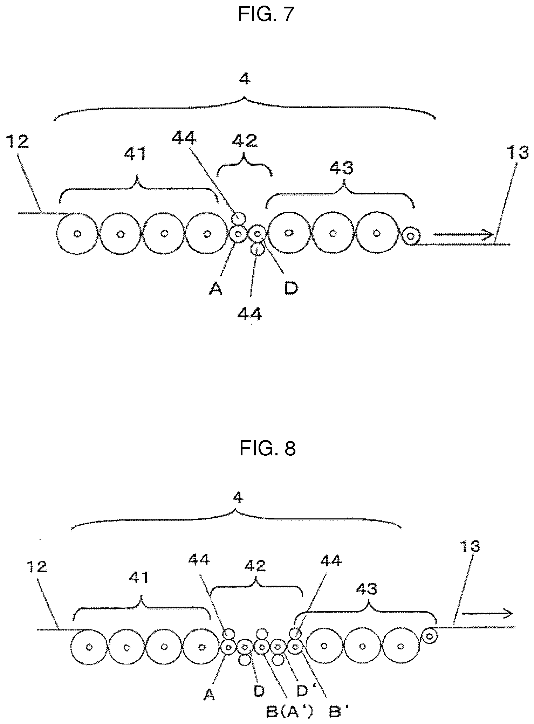

The drawing is performed between roller (A) and roller (D) provided as drawing roller group 42 shown in Fig. 7. The other conditions are the same as Example 1.

### [Comparative Example 2]

The drawing is performed between roller (A) and roller (D) among five rollers provided as drawing roller group 42 shown in Fig. 8. The other conditions are the same as Example 1.

Table 2 shows evaluation results of produced microporous plastic films according to the following standards.

### [Slip on drawing roller]

The speeds of sheet and roller are measured by 1% accuracy including installation accuracy with a non-contact Doppler velocimeter (made by ACT Electronics Corp., model 1522).

No good: The speed difference between roller and sheet is 10% or more of roller rotation speed.

Acceptable: The speed difference between roller and sheet is 5% or more and less than 10% of roller rotation speed.

Good: The speed difference between roller and sheet is less than 5% of roller rotation speed.

### [Meandering amount in lengthwise drawing process]

The amount of meandering in lengthwise drawing process 4 is evaluated according to the following standards.

No good: Meandering amount is 10mm or more.

Acceptable: Meandering amount is 5mm or more and less than 10mm.

Good: Meandering amount is less than 5mm.

### [Bank]

The bank in lengthwise drawing process 4 is evaluated according to the following standards.

No good: Air bank is observed on a roller in lengthwise drawing process 4 while uneven thickness defined as difference between the thickest part and the thinnest part is more than 5% of average thickness.

Acceptable: Air bank is observed on a roller in lengthwise drawing process 4 while uneven thickness defined as difference between the thickest part and the thinnest part is 5% or less of average thickness.

Good: Air bank is not observed on a roller in lengthwise drawing process 4.

### [Neck-in]

Neck-in in lengthwise drawing process 4 is evaluated according to the following standards.

No good: The width difference between gelled sheet 12 entering lengthwise drawing process 4 and uniaxially oriented sheet 13 from lengthwise drawing process 4 to lateral drawing process 5 is more than 150mm.

Acceptable: The width difference between gelled sheet 12 entering lengthwise drawing process 4 and uniaxially oriented sheet 13 from lengthwise drawing process 4 to lateral drawing process 5 is 100mm or more and less than 150mm.

Good: The width difference between gelled sheet 12 entering lengthwise drawing process 4 and uniaxially oriented sheet 13 from lengthwise drawing process 4 to lateral drawing process 5 is less than 100mm.

### [Physical properties and mechanical properties of microporous plastic film]

The impermeability is determined according to JIS P8117 with Oken type Impermeability Tester (made by Asahi Seiko Co., Ltd., EGO-IT). The thrust strength is determined from the maximum load applied when a needle having 1mm diameter and spherical tip (Radius of curvature R=0.5mm) is pricked at 2mm/sec into a microporous membrane having membrane thickness T1. The measured maximum load La is converted to Lb which would be the maximum load when membrane thickness is 16µm according to the following formula: Lb = (La x 16) /T1 to calculate the thrust strength [N/16µm].

Good: The impermeability is 250sec ± 20sec while the thrust strength is 6N or more.

No good: Outside the range for the above-described Good

**[Table 2]**

| | Conveyance | | | | Physical properties, mechanical properties | | |
|---|---|---|---|---|---|---|---|
| | Slip on drawing roller | Meandering | Bank | Neck-in | Thrust strength [N] | Impermeability [sec] | Comprehensive evaluation of physical properties |
| Example 1 | Acceptable | Acceptable | No good | Acceptable | 7 | 250 | Good |
| Example 2 | Good | Acceptable | No good | Good | 7 | 250 | Good |
| Example 3 | Acceptable | Acceptable | Good | Acceptable | 7 | 250 | Good |
| Example 4 | Good | Good | Good | Acceptable | 8 | 230 | Good |
| Comparative Example 1 | No good | No good | No good | Good | 5 | 300 | No good |
| Comparative Example 2 | No good | Acceptable | No good | Good | 6 | 300 | No good |

By comparing Examples and Comparative Examples, it is found that all Examples have good conveyance characteristics with almost no slip and no meandering since the drawing is performed substantively with the surface opposite to the surface contacting first cooling drum 31. On the other hand, all Comparative Examples result in unacceptable slip and meandering. Accordingly, Comparative Examples don't achieve target physical properties and mechanical properties for microporous plastic film.

Also in comparison with Examples 1 and 2, microporous films excellent in appearance and uniform thickness are produced without air bank because gelled sheet 12 is nipped substantively along a tangent line to start contacting the drawing roller in Examples 3 and 4.

The neck-in amount is suppressed with drawing roller (C) in Example 2 while the speed adjustment operation according to the torque of roller (C) is not necessary in Examples 1, 3 and 4 because a pair of roller (A) and roller (B) or another pair of roller (A') and roller (B') are adjacent.

As described above, our invention makes it possible to provide a microporous plastic film excellent in strength and physical properties as maintaining a travelling stability in a drawing condition where the drawing is performed to give the microporous film desirable properties.

### Industrial Applications of the Invention

Our microporous plastic film is applicable to a separator used for electrochemical reaction device such as rechargeable battery, fuel cell and capacitor as well as a functional web such as filtration membrane, print film and clothing material. Besides these examples do not limit applications of our invention.

### Explanation of symbols

11: microporous plastic film
12: gelled sheet (film)
13: uniaxially oriented sheet (film)
14: biaxially oriented sheet (film)
15: microporous plastic film roll
21: extruder
22: gear pump
23: die lip
31: first cooling drum
32: second cooling drum
33: refrigerant-flowing nip roller
4: lengthwise drawing process
41: heating roller group
42: drawing roller group
43: cooling roller group
44: nip roller
5: lateral drawing process
6: washing/drying process
61: washing solvent
7: re-drawing heat-treatment process
8: take-up process
A: upstream drawing roller contacting surface of sheet opposite to surface contacting first cooling drum
B: downstream drawing roller contacting surface of sheet opposite to surface contacting second cooling drum
C: assistant roller of drawing section to convey sheet between rollers (A) and (B)

## Claims

1. A method for producing a microporous plastic film (11), the method comprising:
kneading a diluent and a polyolefin resin with an extruder (21);
discharging the polyolefin resin kneaded with the diluent from a die lip (23) in a sheet shape;
cooling and solidifying the sheet discharged from the die lip (23) on one or plurality of cooling drums (31, 32);
reheating and drawing the solidified sheet with a plurality of rollers (41) in a sheet conveying direction;
cooling the sheet drawn in the sheet conveying direction;
gripping both ends of the sheet with clips;
introducing the sheet into a tenter; and
washing the diluent out to prepare a uniaxially or biaxially oriented microporous plastic film, wherein the method further comprises:
driving each of at least two of the rollers by a motor;
bringing each surface of two rollers A and B among said at least two of the rollers each driven by the motor into contact with a surface of the sheet opposite to another surface contacting a first cooling drum (31) defined as a cooling drum which first contacts the sheet discharged from the die lip (23) among the cooling drums (31, 32); and
controlling each rotation speed of the rollers A and B to draw the sheet substantively between the rollers A and B.

2. The method for producing a microporous plastic film (11) according to claim 1, wherein the sheet is nipped with a nip roller (44) substantively along a tangent line to start contacting at least one of the drawing rollers A and B.

3. The method for producing a microporous plastic film (11) according to claim 1 or 2, wherein the roller A and the roller B are adjacent to each other.

4. The method for producing a microporous plastic film (11) according to any one of claims 1 to 3, wherein a plurality of pairs of roller A and roller B are provided in a lengthwise drawing process (4).

5. The method for producing a microporous plastic film (11) according to any one of claims 1 to 4, wherein a cooling roller (43) is provided as a roller most downstream among one or more pairs of roller A and roller B.

## Patentansprüche

1. Verfahren zur Herstellung einer mikroporösen Kunststofffolie (11), wobei das Verfahren Folgendes umfasst:
das Verkneten eines Verdünners und eines Polyolefinharzes mit einem Extruder (21);
das Ausstoßen des mit dem Verdünner verkneteten Polyolefinharzes aus einer Düsenlippe (23) in einer Bogenform;
das Kühlen und Verfestigen des von der Düsenlippe (23) ausgestoßenen Bogens auf einer oder einer Vielzahl von Kühlwalzen (31, 32);
das erneute Erhitzen und Strecken des verfestigten Bogens mit einer Vielzahl von Walzen (41) in einer Bogenförderrichtung;
das Kühlen des in Bogenförderrichtung gestreckten Bogens;
das Greifen beider Enden des Bogens mit Klammern;
das Einführen des Bogens in einen Spannrahmen; und
das Auswaschen des Verdünners, um eine einachsig oder zweiachsig ausgerichtete mikroporöse Kunststofffolie herzustellen, wobei das Verfahren außerdem Folgendes umfasst:
das Antreiben von jeder von zumindest zwei der Walzen durch einen Motor;
das Inkontaktbringen jeder Fläche von zwei Walzen A und B von den zumindest zwei der Walzen, die jeweils durch den Motor angetrieben werden, mit einer Fläche des Bogens, die zu einer anderen Fläche entgegengesetzt ist, die eine erste Kühlwalze (31) berührt, die von den Kühlwalzen (31, 32) als jene Kühlwalze definiert ist, die den von der Düsenlippe (23) ausgestoßenen Bogen zuerst berührt; und
das Steuern jeder Drehgeschwindigkeit der Walzen A und B, um den Bogen im Wesentlichen zwischen den Walzen A und B zu strecken.

2. Verfahren zur Herstellung einer mikroporösen Kunststofffolie (11) nach Anspruch 1, wobei der Bogen mit einer Andruckwalze (44) im Wesentlichen entlang einer Tangente angedrückt wird, um damit zu beginnen, zumindest eine der Ziehwalzen A und B zu berühren.

3. Verfahren zur Herstellung einer mikroporösen Kunststofffolie (11) nach Anspruch 1 oder 2, wobei die Walze A und die Walze B zueinander benachbart sind.

4. Verfahren zur Herstellung einer mikroporösen Kunststofffolie (11) nach einem der Ansprüche 1 bis 3, wobei eine Vielzahl von Paaren aus Walze A und Walze B in einem Längsrichtungs-Streckvorgang (4) bereitgestellt sind.

5. Verfahren zur Herstellung einer mikroporösen Kunststofffolie (11) nach einem der Ansprüche 1 bis 4, wobei eine Kühlwalze (43) als Walze bereitgestellt ist, die von dem einen oder den mehreren Paaren aus Walze A und Walze B am nachgelagertsten ist.

## Revendications

1. Procédé pour produire un film plastique microporeux (11), le procédé comprenant les étapes consistant à : malaxer un diluant et une résine de polyoléfine avec une extrudeuse (21) ;
décharger la résine de polyoléfine malaxée avec le diluant d'une lèvre de filière (23) dans une forme de feuille ;
faire refroidir et solidifier la feuille déchargée de la lèvre de filière (23) sur un ou une pluralité de tambours de refroidissement (31, 32) ;
faire réchauffer et étirer la feuille solidifiée avec une pluralité de rouleaux (41) dans une direction de transport de feuille ;
faire refroidir la feuille étirée dans la direction de transport de feuille ;
saisir les deux extrémités de la feuille avec des pinces ;
introduire la feuille dans une rame ; et
laver le diluant pour préparer un film plastique microporeux orienté de manière uniaxiale ou biaxiale, dans lequel le procédé comprend en outre les étapes consistant à :
entraîner chacun d'au moins deux des rouleaux par un moteur ;
amener chaque surface des deux rouleaux A et B parmi lesdits au moins deux des rouleaux chacun entraînés par le moteur, en contact avec une surface de la feuille opposée à une autre surface en contact avec un premier tambour de refroidissement (31) défini comme étant un tambour de refroidissement qui est tout d'abord en contact avec la feuille déchargée de la lèvre de filière (23) parmi les tambours de refroidissement (31, 32) ; et
contrôler chaque vitesse de rotation des rouleaux A et B pour étirer la feuille sensiblement entre les rouleaux A et B.

2. Procédé pour produire un film plastique microporeux (11) selon la revendication 1,
dans lequel la feuille est pincée avec un rouleau pinceur (44) sensiblement le long d'une ligne tangente pour commencer à être en contact avec au moins l'un des rouleaux d'étirage A et B.

3. Procédé pour produire un film plastique microporeux (11) selon la revendication 1 ou 2, dans lequel le rouleau A et le rouleau B sont adjacents entre eux.

4. Procédé pour produire un film plastique microporeux (11) selon l'une quelconque des revendications 1 à 3, dans lequel une pluralité de paires de rouleau A et de rouleau B sont prévues dans un procédé d'étirage dans le sens de la longueur (4).

5. Procédé pour produire un film plastique microporeux (11) selon l'une quelconque des revendications 1 à 4, dans lequel un rouleau de refroidissement (43) est prévu comme étant le rouleau le plus en aval parmi les une ou plusieurs paires de rouleau A et de rouleau B.
